# EUROPEAN PATENT SPECIFICATION

(11) **EP 1 752 371 B1**
(45) Date of publication and mention of the grant of the patent: **24.11.2010**
(21) Application number: 06076545.0
(22) Date of filing: 08.08.2006
(51) Int. Cl.: B62K 21/12

(54) **Bicycle handlebar assembly**
Lenkervorbau
Potence de guidon

(30) Priority: 09.08.2005 NL 1029701
(43) Date of publication of application: 14.02.2007
(73) Proprietor: Batavus B.V., 8444 AR Heerenveen (NL)
(72) Inventor: Naberman, Arend, 8281 MV Genemuiden (NL); Van der Woning, Mark Ronald, 8441 GE Heerenveen (NL)
(74) Representative: van Loon, C.J.J.

(56) References cited:
- EP-A- 0 736 447
- DE-A1- 10 326 093
- DE-U1- 20 205 492
- US-A- 4 489 307

## Description

The invention relates to a bicycle handlebar assembly according to the introductory portion of claim 1. The invention also relates to a bicycle provided with such a bicycle handlebar assembly.

Such a bicycle handlebar assembly is known from practice. Nowadays, more and more bicycles are equipped with such a coupling piece, relative to which the handlebar is rotatable with the aid of a handle. An advantage of such a coupling piece is that users can the handlebar rapidly, easily and reliably without using tools. This advantage is for instance particularly welcome during a cycling tour.

Such a handlebar assembly according to the preamble of claim 1 is described in EP 736 447.

These days, more and more bicycles are also equipped with bicycle computers. Such bicycle computers have numerous functions. The cyclist can read, for instance, the current, maximum or average cycling speed, distance covered, elapsed time, temperature, *et cetera.* Some bicycle computers also have altimeter functions, navigation functions, heart rate meter functions, *etc.*

It is known to attach the electronic display of the bicycle computer to the handlebar with the aid of a clamping ring which is clamped around the tube of the handlebar by means of one or more screw bolts.

There are a number of drawbacks attached to the known bicycle handlebar assembly. For instance, a display attached to the handlebar is not well protected against bumping and it is susceptible to external objects such as, for instance, clothing, bags and the like catching thereon inadvertently. As a result, the display may become damaged, twist, or even become detached and fall. The display can also become detached due to vibrations occurring during cycling. A thus attached display is, further, susceptible to theft. Another drawback is that now and again, certain cyclists prefer a cycling position with the hands resting on the handlebar at the location where the display is attached. Then, the display is in the way.

When, with the known bicycle handlebar assembly, the handlebar is rotated with respect to the coupling piece, the read-out unit attached to the handlebar rotates along. To maintain a good readability of the read-out display, the read-out unit is then to be turned back relative to the handlebar. This is an additional operation which takes time and for which, generally, tools such as a screwdriver are required. The advantages of the use of the handle are then partly annulled. Further, due to clamping action and twists of the clamping ring, the handlebar tube can become damaged.

An object of the invention is to provide a solution according to which rotation of the handlebar relative to the coupling piece can be carried out by users in a rapid, simple and reliable manner without tools, while a good readability of the read-out display is maintained.

To this end, according to the invention, a bicycle handlebar assembly according to claim 1 is provided.

As the read-out unit forms an integral part of a handle of the coupling piece, the read-out unit does not rotate along with the handlebar when the handlebar is rotated relative to the coupling piece. The orientation of the read-out unit does not change due to rotation of the handlebar. The read-out display remains well readable on a central position of the bicycle handlebar unit. No additional operations or tools are required any longer for correcting the orientation of the read-out unit relative to the handlebar.

Furthermore, as it is integrated, the read-out unit is better protected against contacts with external objects, theft, becoming detached and the like, and the read-out unit is not in the way. Further, the bicycle handlebar unit is not damaged by the presence of the read-out unit.

The invention can also be embodied in a bicycle according to claim 8.

Specific embodiments of the invention are laid down in the dependent claims.

In the following, the invention is further elucidated with reference to the Figures in the accompanying drawing.
Fig. 1 shows, in perspective, an example of an embodiment of a bicycle handlebar assembly according to the invention;
Fig. 2 shows the example of Fig. 1 in taken apart condition;
Fig. 3 shows the example of Fig. 1 in side view;
Fig. 4A shows, schematically in side view, an example of another embodiment of a bicycle handlebar assembly according to the invention;
Fig. 4B shows, schematically in side view, an example of still another embodiment of a bicycle handlebar assembly according to the invention; and
Fig. 4C shows, schematically in side view, an example of yet another embodiment of a bicycle handlebar assembly according to the invention.

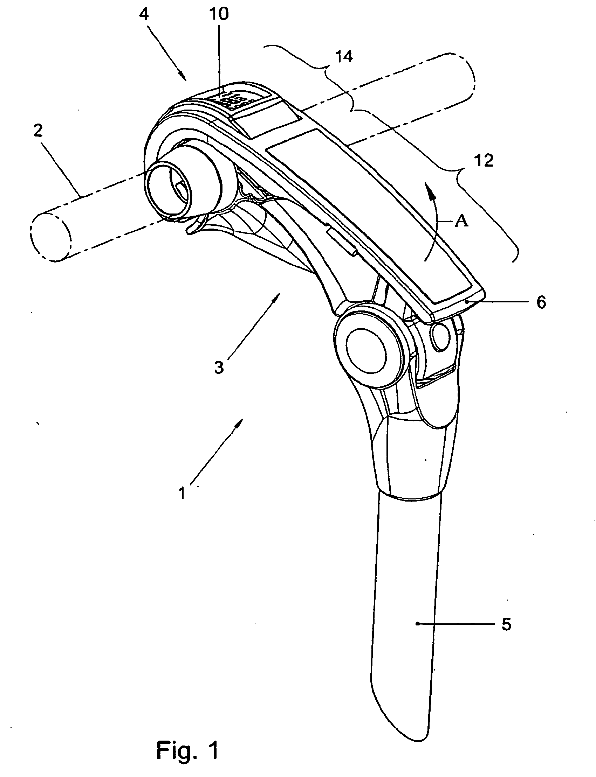

Reference is made first to the example of a bicycle handlebar assembly 1 according to the invention shown in Figs. 1 - 3.

The bicycle handlebar assembly 1 comprises a handlebar 2, a coupling piece 3 and an electronic read-out unit 4. Shown is also an attachment element 5, attachable to a head part of a bicycle front fork, which element, according to this example, is formed by a stem equipped with a special head. The coupling piece 3 couples the handlebar 2 to the stem 5, while the handlebar 2 is rotatable relative to the coupling piece 3.

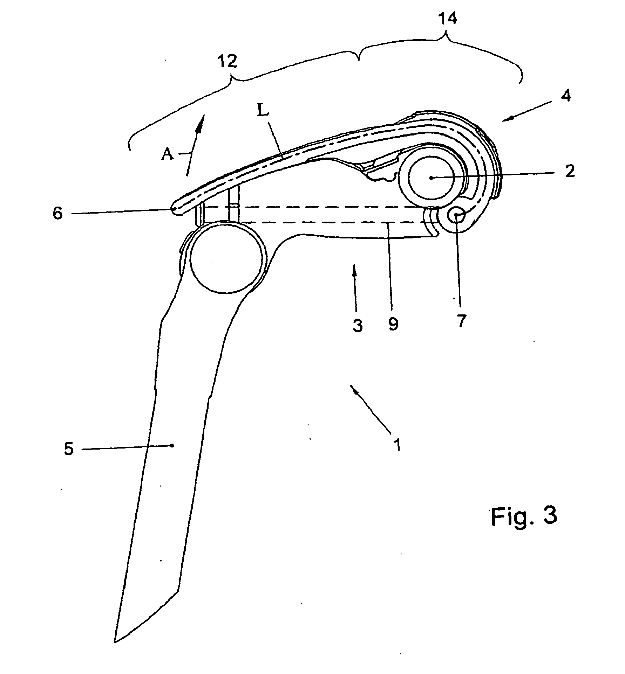

The coupling piece 3 is provided with an operating structure comprising a handle 6 designed for having the coupling piece release and secure different rotation positions of the handlebar relative to the coupling piece. In the example, this is realized as follows. The handle 6 is pivotable about a pivot 7 extending through the coupling piece 3. The pivot 7 has an eccentric part 8 coupled to a tensioning rod 9. In the securing position of the handle 6 shown in Figs. 1 and 3, a tensioning rod 9 clamps a strap configuration around the handlebar 2. When the handle 6 is pivoted about pivot 7 in the direction of the arrow A shown, the tensioning rod is moved through rotation of the eccentric portion 8 such, that the clamping action of the strap configuration on the handlebar 2 is removed. Then, the handle 6 is in a releasing position in which the handlebar can rotate freely in the coupling piece 3. After rotation of the handlebar relative to the coupling piece in this releasing position, the handlebar can be secured in the rotated condition by pivoting the handle 6 in a direction opposite to arrow A until the securing position of the handle is reached.

The read-out unit 4 can form part of a bicycle computer and is provided with a read-out display 10 for representing information for the benefit of a cyclist. The read-out unit 4 forms an integral part of the handle 6. Other parts of the bicycle computer can also form part of the handle 6 but may also be arranged on a different location on a bicycle of which the bicycle handlebar assembly forms part. For instance, other parts of the bicycle computer may be wirelessly, communicatively connected to the read-out unit 4.

As the read-out unit 4 forms an integral part of the handle 6 of the coupling piece, the read-out unit does not rotate along with the handlebar 2 when the handlebar is rotated relative to the coupling piece 3. When, prior to rotating the handlebar, the readability of the read-out display is suitable to a cyclist, this readability will still be suitable after rotation, since the orientation of the read-out display relative to the cyclist has not changed due to the rotation. Therefore, no operations or tools are required for correcting the orientation of the read-out unit. The read-out unit is further well protected against contacts with external objects, theft, becoming detached and the like, and the read-out unit is not in the way.

In the example shown, the coupling piece 3 can also be rotated relative to the stem 5. As the coupling piece is rotatable relative to the stem, the handlebar 2 can be adjusted for height relative to the cyclist. In the example, the handle 6 is also designed for having the coupling piece 3 release and secure different rotation positions of the coupling piece relative to the stem 5. This is realized in the example in that the tensioning rod 9 cooperates not only with the strap configuration which can clamp the handlebar tube 2, but also with a second strap configuration, which can clamp the stem 5. Instead of the use of one such handle 6, the coupling piece 3 can also have two different handles. This means a first handle for releasing and securing rotation positions of the handlebar relative to the coupling piece, and a second handle for releasing and securing rotation positions of the coupling piece relative to the stem. One handle may be situated on the upper side of the coupling piece while the other handle can be situated on the bottom side, or on a side. But the two handles can also both be situated on the upper side of the coupling piece.

It is advantageous when the read-out unit forms part of a handle situated, at least partly, on the upper side of the coupling piece, that is to say, the side of the coupling piece forming the upper side of the coupling piece when the coupling piece is oriented as represented in the Figures. The read-out display can then be read well by a cyclist. When a handle, which is designed for releasing and securing different rotation positions of the handlebar relative to the coupling piece, is situated at least partly on the upper side of the coupling piece, it is hence advantageous when the read-out unit forms part of this respective handle. When a handle, which is designed for releasing and securing different rotation positions of the coupling piece relative to the stem, is situated, at least partly, on the upper side of the coupling part, it is hence advantageous when the read-out unit forms part of the latter handle.

The operation of the handle 6 is based on lever action. This means that with relatively little force, a user can move the tensioning rod 9 of the operating structure of the coupling piece in order to change between the securing position, in which the coupling piece secures the handlebar and the stem, and the releasing position, in which the handlebar and the stem can rotate freely in the coupling piece 3. To that end, the handle 6 has an engaging portion 12 for manual operation of the handle 6, which engaging portion 12, for the purpose of said lever action, is situated at a distance from the pivot 7, viewed in longitudinal direction L (see Fig. 3) of the handle 6. The farther the engaging portion 12 is located from the pivot 7, the better the lever action is. The handle 6 also has a read-out portion 14 situated outside the engaging portion 12, which read-out portion extends in the longitudinal direction L of the engaging portion 12 in the direction of the pivot 7. The read-out unit 4, or at least the read-out display 10 of this read-out unit, is situated in this read-out portion 14.

As the engaging portion 12 is situated at a distance from the pivot 7 and the read-out portion 14 is situated outside the engaging portion 12, a good lever action is obtained without users engaging the read-out unit 4 or at least the read-out display 10 thereof, when operating the handle 6.

In the example, the handle 6 has a part which, in securing position, embraces the handlebar 2, and the read-out portion 14 extends at least partly over said embracing part. This is realized in that the pivot 7 is situated under the handlebar. Thus, for lever action, there is a long arm between the engaging part 12 situated on the upper side of the coupling piece 2 and the pivot 7, while much space remains for situating the read-out display.

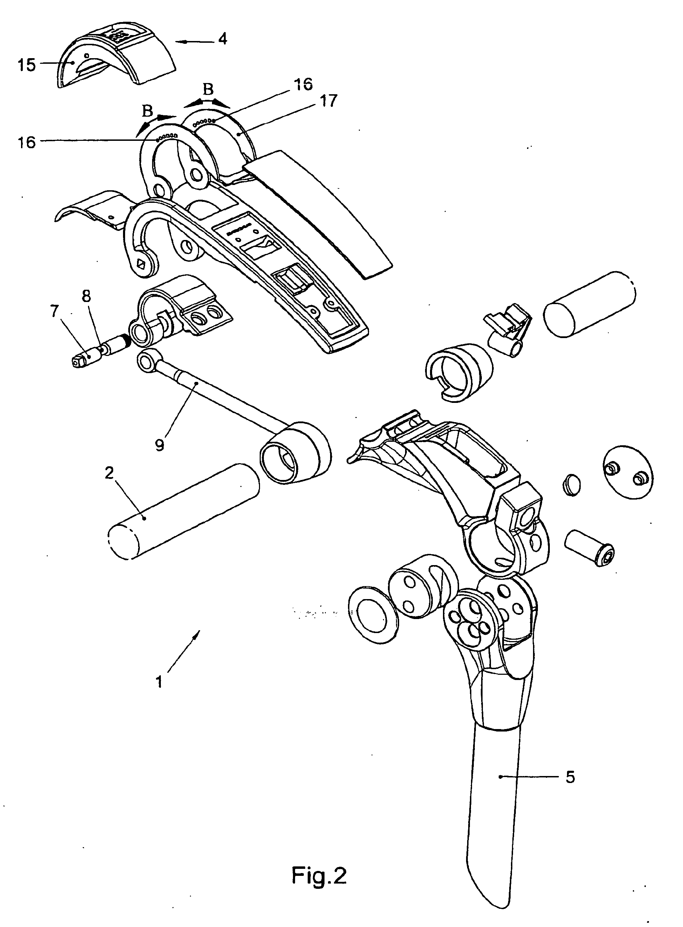

The handle 6 further comprises adjusting means for adjusting the internal orientation of the read-out unit 4 within the handle. In the example, this is realized in that the read-out unit 4 has a small pin 15 on either side (see Fig. 2). On both sides of a cavity in which is included the read-out unit 4, integrated in the handle, the handle 6 has a number of recesses 16 in which the pins 15 fit. A user can thus manually move the read-out unit to and fro in the direction of the arrows B represented in Fig. 2, in a manner such that the read-out unit 4 can be secured in different orientations. The recesses 16 may be formed in a suitable plastic inlay 17 that slightly yields when moving the read-out unit to and fro and when introducing the pins 15 into the recesses 16.

The adjusting means are particularly convenient when the coupling piece 3 is rotated relative to the stem 5. The fact is that in that case, the orientation of the read-out unit changes relative to the eyes of a cyclist. The adjusting means are also convenient when a change of cyclists takes place, with the new and previous cyclist having mutually different postures.

It is noted that similar adjusting means with similar advantages can also be used with an electronic read-out unit not forming part of such a handle of such a coupling piece. This may be the case when the read-out unit forms an integral part of another part of a coupling piece for coupling a handlebar to an attachment element attachable to a head part of a front fork. But this may also be the case when the read-out unit forms part of a handlebar, of an attachment element attachable to a head part of a front fork, or of a special holder for retaining the read-out unit on the bicycle. The latter holder may be a holder for attaching the read-out unit to a handlebar. In the cases mentioned, such other part of the coupling piece, such a handlebar, such an attachment element or such a holder, respectively, may be provided with adjusting means for adjusting the internal orientation of the read-out unit within the other part of the coupling piece, the handlebar, the attachment element or the holder, respectively. In such cases too, a user can then simply move the read-out unit to and fro by hand.

The advantages of the adjusting means are particularly well expressed when the adjusting means are used with a read-out unit which is situated in an area embracing the handlebar. The fact is that in that case, the curvature of the cross-section of the handlebar is used for obtaining a wide adjustment range of the read-out unit. This is the case for instance in the example shown, wherein the read-out unit 14 extends at least over such a part of the handle 6 embracing the handlebar 2.

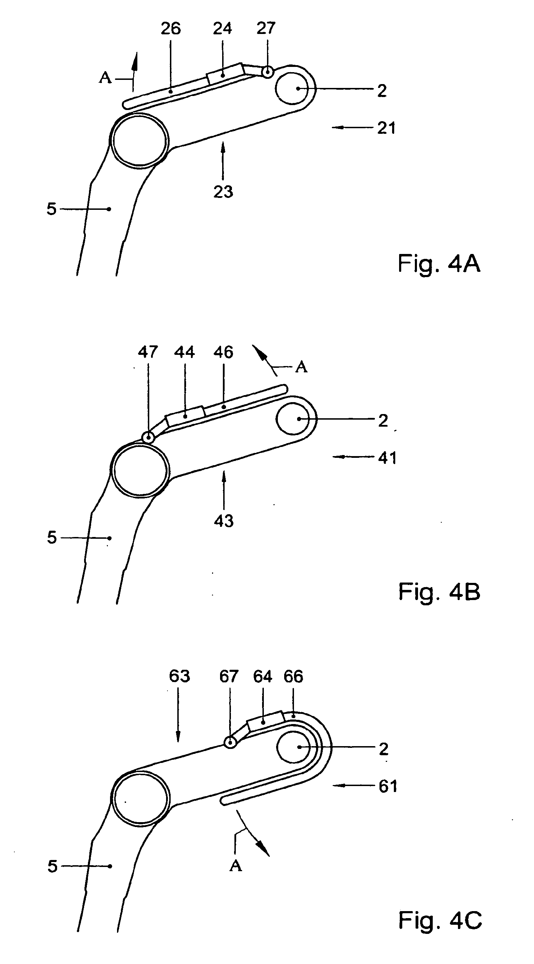

Reference is now made to Figs. 4A, 4B and 4C. These Figures show three further examples of other embodiments of a bicycle handlebar assembly according to the invention, respectively. The handles shown in these Figures are in the securing position and can be brought into the releasing position by moving the handles about their pivot in the direction of the arrows A shown in the Figures.

Fig. 4A shows a bicycle handlebar assembly 21 provided with a coupling piece 23 with a handle 26 with integrated read-out unit 24, which handle is pivotable about a pivot 27. A difference to the bicycle handlebar assembly 1 shown in Figs. 1- 3 is that the handle 26 does not have a part embracing the handlebar. The pivot 27 is located on the upper side of the coupling piece in the proximity of the handlebar 2. The read-out unit 24 is situated in the proximity of the pivot 27.

Fig. 4B shows a bicycle handlebar assembly 41 provided with a coupling piece 43 with a handle 46 with integrated read-out unit 44, which handle is pivotable about a pivot 47. A difference to the bicycle handlebar assembly 21 shown in Fig. 4A is that the pivot 47 is situated in the proximity of the stem 5. The read-out unit 24 is situated in the proximity of the pivot 47.

Fig. 4C shows a bicycle handlebar assembly 61 provided with a coupling piece 63 with a handle 66 with integrated read-out unit 64, which handle is pivotable about a pivot 67. Like the bicycle handlebar assembly 1 shown in Figs. 1-3, the handle 66 has a part embracing the handlebar 2. However, the pivot 67 is situated on the upper side of the coupling piece in the proximity of the handlebar 2. The engaging portion of the handle 66 is situated on the underside of the coupling piece 63 and the read-out portion of the handle extends at least partly over the upper side of the coupling piece and/or over the part embracing the handlebar.

It is noted that the above-mentioned examples of embodiments do not delimit the invention and that within the scope of the accompanying claims, various alternatives are possible. For instance, the examples shown have handles that are pivotable about pivots which are more or less parallel to the direction of the tube part of the handlebar clamped by the coupling piece. However, various other types of handles can be utilized which are pivotable about pivots oriented differently in various other manners. For instance, handles may be used with which the pivot is more or less transverse to said direction as shown in EP1394032A1. But other directions of the pivots are possible too, whereby it is always possible to situate engaging portions of the handles at a distance from the pivots and read-out portions outside engaging parts. Coupling pieces with two or more handles can also be used, while the different handles may be situated on the upper side and/or lower side and/or on a side of a coupling piece. Such and similar alternatives are understood to fall within the framework of the invention as defined in the appended claims.

## Claims

1. A bicycle handlebar assembly comprising:
- a coupling piece (3; 23; 43; 63) for coupling a handlebar (2) to an attachment element (5), attachable to a head portion of a front fork, wherein, with the coupling piece in coupled condition, at least the handlebar is rotatable relative to the coupling piece, while the coupling piece is provided with an operating structure comprising at least one handle (6; 26; 46; 66), one of which is designed for having the coupling piece in coupled condition release and secure different rotation positions of at least the handlebar (2) relative to the coupling piece (3; 23; 43; 63); and
- an electronic read-out unit (4; 24; 44; 64) provided with a read-out display (10) for representing information for the benefit of a cyclist;
**characterized in that** the read-out unit (4; 24; 44; 64) forms an integral part of one of the at least one handle (6; 26; 46; 66).

2. A bicycle handlebar assembly according to claim 1, wherein the coupling piece (3; 23; 43; 63) in the coupled condition is rotatable relative to the attachment element (5), and one of the at least one handle is designed for having the coupling piece in coupled condition release and secure different rotation positions of the coupling piece relative to the at least one attachment element (5).

3. A bicycle handlebar assembly according to claim 1 or 2, wherein the handle (6; 26; 46; 66) with integrated read-out unit (4; 24; 44; 64) is the handle that is designed for having the coupling piece in the coupled condition release and secure different rotation positions of at least the handlebar (2) relative to the coupling piece (3; 23; 43; 63).

4. A bicycle handlebar assembly according to claim 2, wherein the handle (6; 26; 46; 66) with integrated read-out unit (4; 24; 44; 64) is the handle that is designed for having the coupling piece in coupled condition release and secure different rotation positions of the coupling piece (3; 23; 43; 63) relative to at least the attachment element (5).

5. A bicycle handlebar assembly according to any one of the preceding claims, wherein the handle (6; 26; 46; 66) with integrated read-out unit (4; 24; 44; 64) is pivotable about a pivot (7; 27; 47; 67) extending through the coupling piece (3; 23; 43; 63), between a securing position, in which the coupling piece secures the handlebar (2) and/or the attachment element (5), and a releasing position in which the handlebar and/or the attachment element can rotate freely in the coupling piece, the handle with integrated read-out unit having an engaging portion (12) for manual operation of the handle with integrated read-out unit, which engaging portion (12), for the purpose of lever action of the handle with integral read-out unit, is situated at a distance from the pivot (7; 27; 47; 67), viewed in longitudinal direction (L) of the handle with integrated read-out unit, while at least the read-out display (10) of the read-out unit is situated in a read-out portion (14) of the handle with integrated read-out unit located outside the engaging portion (12), which read-out portion (14) extends, viewed in said longitudinal direction (L), from the engaging portion (12) in the direction of the pivot (7; 27;47; 67).

6. A bicycle handlebar assembly according to claim 5, wherein the handle with integrated read-out unit has a portion which, in the securing condition, embraces the handlebar (2) at least partly, and the read-out portion (14) extends, at least partly, over said embracing part.

7. A bicycle handlebar assembly according to any one of the preceding claims, wherein the handle with integrated read-out unit comprises adjusting means (15, 16, 17) for adjusting the internal orientation of the read-out unit within the handle.

8. A bicycle provided with a bicycle handlebar assembly (1; 21; 41; 61) according to any one of claims 1-7.

## Patentansprüche

1. Eine Fahrradlenkerbaugruppe, umfassend:
- ein Kopplungsstück (3; 23; 43; 63) zum Koppeln eines Lenkers (2) an ein Befestigungselement (5), das an einem Kopfabschnitt einer Vordergabel befestigbar ist, wobei, wenn das Kopplungsstück sich im gekoppelten Zustand befindet, zumindest der Lenker relativ zum Kopplungsstück drehbar ist, während das Kopplungsstück mit einer Bedienungsstruktur versehen ist, die zumindest einen Handgriff (6; 26; 46; 66) umfasst, von denen einer ausgelegt ist, das Kopplungsstücks im gekoppelten Zustand zu veranlassen, verschiedene Drehpositionen zumindest des Lenkers (2) relativ zum Kopplungsstück (3; 23; 43; 63) zu lösen und zu fixieren; und
- eine elektronische Anzeigeeinheit (4; 24; 44; 64), die mit einem Anzeigedisplay (10) zum Darstellen von Information zum Nutzen eines Fahrradfahrers versehen ist,
**dadurch gekennzeichnet, dass** die Anzeigeeinheit (4; 24; 44; 64) einen integralen Teil eines der mindestens einen Handgriffe (6; 26; 46; 66) bildet.

2. Eine Fahrradlenkerbaugruppe nach Anspruch 1, wobei das Kopplungsstück (3; 23; 43; 63) in dem gekoppelten Zustand relativ zu dem Befestigungselement (5) drehbar ist, und einer des zumindest einen Handgriffs ausgelegt ist, das Kopplungsstück im gekoppelten Zustand zu veranlassen, verschiedene Drehpositionen des Kopplungsstücks relativ zu dem zumindest einen Befestigungselement (5) zu lösen und zu fixieren.

3. Eine Fahrradlenkerbaugruppe nach Anspruch 1 oder 2, wobei der Handgriff (6; 26; 46; 66) mit der integrierten Anzeigeeinheit (4; 24; 44; 64) der Handgriff ist, der ausgelegt ist, das Kopplungsstück im gekoppelten Zustand zu veranlassen, verschiedene Drehpositionen zumindest des Lenkers (2) relativ zum Kopplungsstück (3; 23; 43; 63) zu lösen und zu fixieren.

4. Eine Fahrradlenkerbaugruppe nach Anspruch 2, wobei der Handgriff (6; 26; 46; 66) mit der integrierten Anzeigeeinheit (4; 24; 44; 64) der Handgriff ist, der ausgelegt ist, das Kopplungsstück im gekoppelten Zustand zu veranlassen, verschiedene Drehpositionen zumindest des Kopplungsstücks (3; 23; 43; 63) relativ zum Befestigungsstück (5) zu lösen und zu fixieren.

5. Eine Fahrradlenkerbaugruppe nach irgendeinem der vorangehenden Ansprüche, wobei der Handgriff (6; 26; 46; 66) mit der integrierten Anzeigeeinheit (4; 24; 44; 64) um einen sich durch das Kopplungsstück (3; 23; 43; 63) erstreckenden Zapfen (7; 27; 47; 67) zwischen einer Fixierposition, in der das Kopplungsstück den Lenker (2) und/oder das Befestigungselement (5) fixiert, und einer Löseposition, in der der Lenker und/oder das Befestigungselement sich frei im Kopplungsstück drehen können, schwenkbar ist, wobei der Handgriff mit der integrierten Anzeigeeinheit einen Eingriffabschnitt (12) zur manuellen Bedienung des Handgriffs mit der integrierten Anzeigeeinheit aufweist, wobei der Eingriffabschnitt (12), zum Zwecke der Hebelwirkung des Handgriffs mit der integrierten Anzeigeeinheit, in einem Abstand von dem Zapfen (7; 27; 47; 67) angeordnet ist, gesehen in Längsrichtung (L) des Handgriffs mit der integrierten Anzeigeeinheit, während zumindest das Anzeigedisplay (10) der Anzeigeeinheit in einem Anzeigeabschnitt (14) des Handgriffs mit der integrierten Anzeigeeinheit, der sich außerhalb des Eingriffabschnitts (12) befindet, angeordnet ist, wobei der Anzeigeabschnitt (14), in besagter Längsrichtung (L) gesehen, sich von dem Eingriffabschnitt (12) in die Richtung des Zapfens (7; 27;47; 67) erstreckt.

6. Eine Fahrradlenkerbaugruppe nach Anspruch 5, wobei der Handgriff mit der integrierten Anzeigeeinheit einen Abschnitt aufweiset, der im Fixierungszustand den Lenker (2), zumindest teilweise umgreift, und der Anzeigeabschnitt (14) sich zumindest teilweise über den umgreifenden Teil erstreckt.

7. Eine Fahrradlenkerbaugruppe nach irgendeinem der vorangehenden Ansprüche, wobei der Handgriff mit der integrierten Anzeigeeinheit Verstellmittel (15, 16, 17) umfasst, um die interne Orientierung der Anzeigeeinheit innerhalb des Handgriffes zu verstellen.

8. Ein Fahrrad, das mit einer Fahrradlenkerbaugruppe (1 ; 21; 41; 61) nach irgendeinem der Ansprüche 1 - 7 versehen ist.

## Revendications

1. Ensemble de guidon de bicyclette comprenant :
une pièce d'accouplement (3 ; 23 ; 43 ; 63) destinée à relier un guidon (2) à un élément de fixation (5), pouvant être fixé à une partie de tête d'une fourche avant, où, lorsque la pièce d'accouplement est dans un état relié, au moins le guidon peut tourner par rapport à la pièce d'accouplement, alors que la pièce d'accouplement est dotée d'une structure de fonctionnement comprenant au moins une poignée (6 ; 26 ; 46 ; 66), dont l'une est conçue pour que la pièce d'accouplement, dans l'état relié, libère et fixe différentes positions de rotation d'au moins le guidon (2) par rapport à la pièce d'accouplement (3 ; 23 ; 43 ; 63), et
une unité de lecture électronique (4 ; 24 ; 44 ; 64) dotée d'un dispositif d'affichage de lecture (10) destiné à présenter des informations à l'attention d'un cycliste,
**caractérisé en ce que** l'unité de lecture (4 ; 24 ; 44 ; 64) forme une partie intégrante de l'une de ladite au moins une poignée (6 ; 26 ; 46 ; 66).

2. Ensemble de guidon de bicyclette selon la revendication 1, dans lequel la pièce d'accouplement (3 ; 23 ; 43 ; 63), dans l'état relié, peut tourner par rapport à l'élément de fixation (5), et l'une de ladite au moins une poignée est conçue pour que la pièce d'accouplement, dans l'état relié, libère et fixe différentes positions de rotation de la pièce d'accouplement par rapport audit au moins un élément de fixation (5).

3. Ensemble de guidon de bicyclette selon la revendication 1 ou 2, dans lequel la poignée (6 ; 26 ; 46 ; 66) comportant l'unité de lecture intégrée (4 ; 24 ; 44 ; 64) est la poignée qui est conçue pour que la pièce d'accouplement, dans l'état relié, libère et fixe différentes positions de rotation d'au moins le guidon (2) par rapport à la pièce d'accouplement (3 ; 23 ; 43 ; 63).

4. Ensemble de guidon de bicyclette selon la revendication 2, dans lequel la poignée (6 ; 26 ; 46 ; 66) comportant l'unité de lecture intégrée (4 ; 24 ; 44 ; 64) est la poignée qui est conçue pour que la pièce d'accouplement, dans l'état relié, libère et fixe différentes positions de rotation de la pièce d'accouplement (3 ; 23 ; 43 ; 63) par rapport à au moins l'élément de fixation (5).

5. Ensemble de guidon de bicyclette selon l'une quelconque des revendications précédentes, dans lequel la poignée (6 ; 26 ; 46 ; 66) comportant l'unité de lecture intégrée (4 ; 24 ; 44 ; 64) peut pivoter autour d'un pivot (7 ; 27 ; 47 ; 67) s'étendant au travers de la pièce d'accouplement (3 ; 23 ; 43 ; 63), entre une position de fixation, dans laquelle la pièce d'accouplement fixe le guidon (2) et/ou l'élément de fixation (5), et une position de libération, dans laquelle le guidon et/ou l'élément de fixation peuvent tourner librement dans la pièce d'accouplement, la poignée comportant l'unité de lecture intégrée comportant une partie d'engagement (12) pour un actionnement manuel de la poignée comportant l'unité de lecture intégrée, laquelle partie d'engagement (12), en vue d'une action de levier de la poignée comportant l'unité de lecture intégrée, est située à une certaine distance du pivot (7 ; 27 ; 47 ; 67), en regardant dans une direction longitudinale (L) de la poignée comportant l'unité de lecture intégrée, alors qu'au moins le dispositif d'affichage de lecture (10) de l'unité de lecture est situé dans une partie de lecture (14) de la poignée comportant l'unité de lecture intégrée qui est située à l'extérieur de la partie d'engagement (12), laquelle partie de lecture (14) s'étend, en regardant dans ladite direction longitudinale (L), depuis la partie d'engagement (12) dans la direction du pivot (7 ; 27 ; 47 ; 67).

6. Ensemble de guidon de bicyclette selon la revendication 5, dans lequel la poignée comportant l'unité de lecture intégrée présente une partie qui, dans l'état de fixation, entoure le guidon (2) au moins partiellement, et la partie de lecture (14) s'étend, au moins partiellement, au-dessus de ladite partie d'entourage.

7. Ensemble de guidon de bicyclette selon l'une quelconque des revendications précédentes, dans lequel la poignée comportant l'unité de lecture intégrée comprend un moyen de réglage (15 , 16 , 17) destiné à régler l'orientation interne de l'unité de lecture à l'intérieur de la poignée.

8. Bicyclette dotée d'un ensemble de guidon de bicyclette (1 ; 21 ; 41 ; 61) selon l'une quelconque des revendications 1 à 7.
